# EUROPEAN PATENT SPECIFICATION

(11) **EP 3 940 491 B1**
(45) Date of publication and mention of the grant of the patent: **01.11.2023**
(21) Application number: 20774457.4
(22) Date of filing: 13.03.2020
(51) Int. Cl.: G05B 23/02

(54) **MONITORING DEVICE, MONITORING METHOD AND MONITORING PROGRAM**
ÜBERWACHUNGSVORRICHTUNG, ÜBERWACHUNGSVERFAHREN UND ÜBERWACHUNGSPROGRAMM
DISPOSITIF DE SURVEILLANCE, PROCÉDÉ DE SURVEILLANCE ET PROGRAMME DE SURVEILLANCE

(30) Priority: 15.03.2019 JP 2019048584
(43) Date of publication of application: 19.01.2022
(73) Proprietor: SUMITOMO HEAVY INDUSTRIES, LTD., Tokyo 141-6025 (JP)
(72) Inventor: KADOWAKI, Masanori, Yokosuka-shi, Kanagawa 237-8555 (JP)
(74) Representative: Louis Pöhlau Lohrentz
(86) International application number: PCT/JP2020/011282
(87) International publication number: WO 2020/189585

(56) References cited:
- WO-A1-2018/203470
- JP-A- H04 372 046
- JP-A- H04 372 046
- JP-A- H07 121 230
- JP-A- 2001 216 003
- JP-A- 2008 503 012
- US-B2- 7 660 701

## Description

### Technical Field

The present invention relates to a monitoring device, a monitoring method, and a monitoring program.

### Background Art

In the related art, process data, which is time-series data related to an operation state of a plant, may be measured, and past process data may be used as learning data to generate a model representing a relationship between process data. There is a case where a generated model is used to determine that the plant is operating normally.

For example, Patent Literature 1 describes an evaluation device of learning knowledge for determining whether or not the learning knowledge is appropriate by comparing a target value when a control device controls a control target with a past actually measured value related to the control target.

Further, Patent Literature 2 describes a demand forecasting device that creates a forecasting model for forecasting a demand amount based on actual result data of a past demand amount, and corrects the demand amount based on the actual result data, future weather forecast data, and forecasted demand amount. Patent Literature 3 describes a learning apparatus, a learning method, and a learning program. Patent Literature 4 describes systems and methods for monitoring control loops in a process plant. Patent Literature 5 describes a method for predicting the future demand of electric power, water, and commodities.

### Citation List

### Patent Literature

[PTL 1] Japanese Unexamined Patent Publication No. 7-219604
[PTL 2] Japanese Unexamined Patent Publication No. 2018-73214
[PTL 3] International Patent Publication No. WO 2018-203470 A1
[PTL 4] United States Patent No. US 7660701 B2
[PTL 5] Japanese Unexamined Patent Publication No. JP H04-372046 A

### Summary of Invention

### Technical Problem

When a model representing the relationship between process data is generated by using past process data as learning data, it is premised that the actually measured process data is accumulated to some extent. However, when the data amount of actually measured process data is limited, such as immediately after starting the plant, it becomes difficult to generate a model, and there is a case where a period during which the operation state of the plant cannot be determined is generated.

Therefore, the present invention provides a monitoring device, a monitoring method, and a monitoring program capable of determining the operation state of the plant even when the data amount of actually measured process data is limited.

### Solution to Problem

According to an aspect of the present invention, there is provided a monitoring device including: an acquisition unit configured to acquire an actually measured value of process data related to a plant; an input unit configured to receive input of a forecast value of the process data related to the plant; a model generation unit configured to generate a model representing a relationship between the process data based on the input process data; a determination unit configured to determine an operation state of the plant in a first determination mode using the model which is generated based on the forecast value of the process data or in a second determination mode using the model which is generated based on the actually measured value of the process data; and a display unit that displays a determination result of the operation state determined by the determination unit, in which when a data accumulation amount of the actually measured process data is smaller than a predetermined amount, the determination unit determines the operation state of the plant in the first determination mode, and when the data accumulation amount of the actually measured process data is equal to or greater than the predetermined amount, the determination unit determines the operation state of the plant in the second determination mode.

According to this aspect, by determining the operation state of the plant in the first determination mode using the model generated based on the forecast value of the process data which is not actually measured, when the data amount of actually measured process data is limited, it is possible to generate a model representing the relationship between the process data to determine the operation state of the plant. Accordingly, the operation state can be determined immediately after the plant is started, and downtime can be reduced.

According to an another aspect of the present invention, there is provided a monitoring method executed by a monitoring device that monitors a plant, the method including: acquiring an actually measured value of process data related to the plant; receiving input of a forecast value of the process data related to the plant; generating a model representing a relationship between the process data based on the input process data; determining an operation state of the plant in a first determination mode using the model which is generated based on the forecast value of the process data when a data accumulation amount of the actually measured process data is smaller than a predetermined amount or in a second determination mode using the model which is generated based on the actually measured value of the process data when the data accumulation amount of the actually measured process data is equal to or greater than the predetermined amount; and displaying a determination result of the operation state determined by the determining.

According to still another aspect of the present invention, a monitoring program executes a process including: acquiring an actually measured value of process data related to the plant; receiving input of a forecast value of the process data related to the plant; generating a model representing a relationship between the process data based on the input process data; determining an operation state of the plant in a first determination mode using the model which is generated based on the forecast value of the process data when a data accumulation amount of the actually measured process data
is smaller than a predetermined amount or in a second determination mode using the model which is generated based on the actually measured value of the process data when the data accumulation amount of the actually measured process data is equal to or greater than the predetermined amount; and displaying a determination result of the operation state determined by the determining.

### Advantageous Effects of Invention

According to the present invention, a monitoring device, a monitoring method, and a monitoring program capable of generating a model representing the relationship between the process data even when the data amount of actually measured process data is limited, can be provided.

### Brief Description of Drawings

Fig. 1 is a view illustrating a functional block of a monitoring device according to an embodiment of the present invention.
Fig. 2 is a view illustrating a physical configuration of a monitoring device according to the present embodiment.
Fig. 3 is a view illustrating a model representing a relationship between process data generated by the monitoring device according to the present embodiment.
Fig. 4 is a view illustrating a degree of abnormality computed by the monitoring device according to the present embodiment.
Fig. 5 is a flowchart of a determination process executed by the monitoring device according to the present embodiment.
Fig. 6 is a view illustrating data points plotted by the monitoring device according to the present embodiment.
Fig. 7 is a flowchart of a model generation process executed by the monitoring device according to the present embodiment.

### Description of Embodiments

Hereinafter, embodiments of the present invention will be described in detail with reference to the attached drawings. In each drawing, those having the same reference numerals have the same or similar configurations.

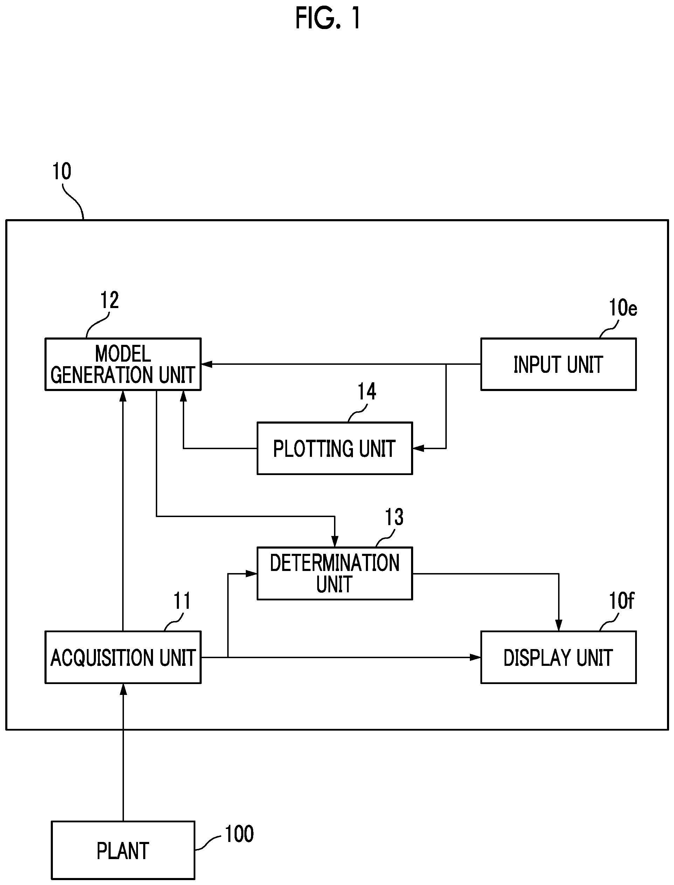

Fig. 1 is a view illustrating a functional block of a monitoring device 10 according to an embodiment of the present invention. The monitoring device 10 is a device that monitors an operation state of a plant 100, and includes an acquisition unit 11, a model generation unit 12, a determination unit 13, a plotting unit 14, an input unit 10e, and a display unit 10f.

The acquisition unit 11 acquires process data related to the plant 100. Here, the plant 100 may be any plant, but, for example, a power plant or an incineration plant including a boiler, a chemical plant, a wastewater treatment plant, and the like, of which process data can be acquired, are targeted. Further, the process data may be any data related to the plant 100, but may be, for example, data obtained by measuring a state of the plant 100 with a sensor, and more specifically, may include the measured value of the temperature, pressure, flow rate, and the like of the plant 100. The acquisition unit 11 may acquire the process data at predetermined time intervals or continuously acquire process data to acquire time-series data related to the plant 100.

The acquisition unit 11 may acquire a plurality of types of process data related to the plant 100. The acquisition unit 11 may acquire a plurality of types of process data measured by a plurality of sensors installed in the plant 100. Here, the plurality of types of process data may be, for example, data representing different physical quantities such as temperature and pressure, or may be data representing the same physical quantity such as temperatures measured at different locations in the plant 100.

The input unit 10e receives the input of the process data. The input unit 10e may be configured with a touch panel, a pointing device such as a mouse, or a keyboard, and may receive input of a forecast value of process data forecasted by a person. The input unit 10e may receive the input of the handwritten graph in the drawing area where the process data is drawn, or may receive the input of the handwriting range including the handwritten graph. The process data input by the input unit 10e will be described in detail later with reference to the drawings.

The display unit 10f displays a drawing area in which the process data is drawn. The display unit 10f is used to monitor the operation state of the plant 100, and may display the determination result of the operation state of the plant 100 by the monitoring device 10. The contents displayed on the display unit 10f will be described in detail later with reference to the drawings.

The model generation unit 12 generates a model representing the relationship between the process data based on the input process data. The model representing the relationship of the process data may be a model that shows a range in which the process data fits when the operation state of the plant 100 is normal, or may be a model that extracts the characteristics illustrated by the process data when the operation state of the plant 100 is abnormal.

The model generation unit 12 may generate a model based on the design value of the process data. Here, the design value of the process data means a target value or a set value at the time of plant design. More specifically, the design value of the process data is a value of the process data that should be measured in the design of the plant 100, and is a value of the process data that is measured when the plant 100 is operating normally. The model generation unit 12 may refer to the design value of the process data to be measured when the plant 100 is operating normally, and generate a model representing the relationship of the process data. By generating a model representing the relationship between the process data based on the design value of process data, even when the data amount of actually measured process data is limited, it is possible to generate a model representing the relationship between the process data, and to determine the operation state of the plant 100.

The determination unit 13 determines the operation state of the plant 100 in the first determination mode using a model generated based on the forecast value of the process data input by a person or in the second determination mode using the model generated based on the actually measured value of the process data. Further, the determination unit 13 may determine the operation state of the plant 100 by using the model generated based on the design value of the process data. The model generated based on the forecast value of the process data input by a person and the model generated based on the actually measured value of the process data may be the same model in which the data used for model generation is different, but may be different models. Further, the second determination mode may be a mode in which a model generated based on the forecast value of the process data input by a person using a new model based on the actually measured value of the process data. The model used in the second determination mode may be a model generated independently of the model used in the first determination mode, or may be a model obtained by modifying the model used in the first determination mode.

In the monitoring device 10 according to the present embodiment, by determining the operation state of the plant 100 in the first determination mode using the model generated based on the process data which is not actually measured, when the data amount of actually measured process data is limited, it is possible to generate a model representing the relationship between the process data to determine the operation state of the plant 100. Accordingly, the operation state can be determined immediately after the plant 100 is started, and the start-up time when the plant 100 is newly installed can be shortened, or the downtime when the plant 100 is temporarily stopped can be reduced.

The determination unit 13 may compute a degree of abnormality of the operation state of the plant 100 and determine the operation state of the plant 100 based on the degree of abnormality, in the first determination mode or the second determination mode, based on the actually measured process data. An example of the degree of abnormality computed by the determination unit 13 will be described in detail later with reference to the drawings.

The plotting unit 14 plots the data points representing the handwritten graph received by the input unit 10e in the drawing area. In addition, the plotting unit 14 may plot the data points representing the handwritten graph received by the input unit 10e and the handwriting range in the drawing area. The processing by the plotting unit 14 will be described in detail later with reference to the drawings.

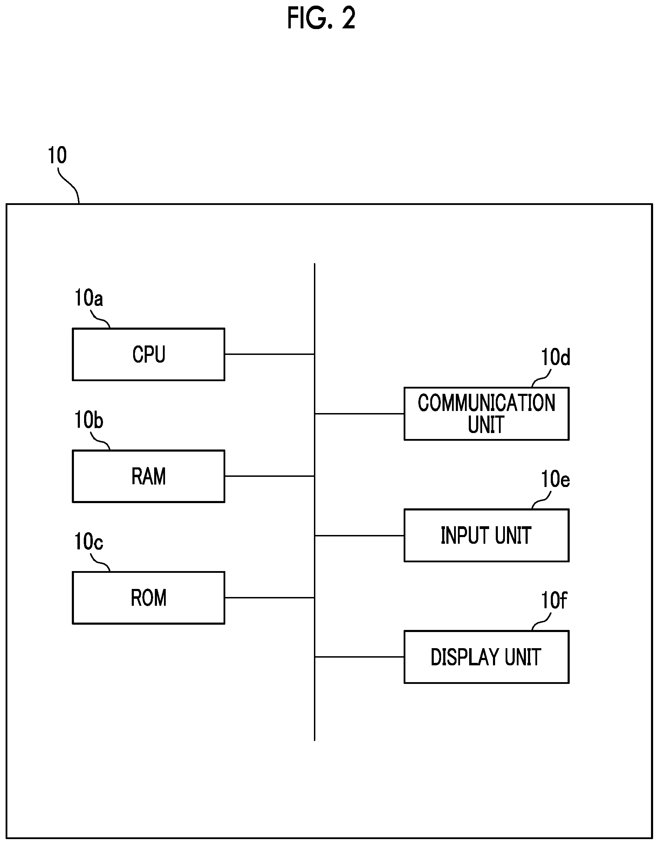

Fig. 2 is a view illustrating a physical configuration of the monitoring device 10 according to the present embodiment. The monitoring device 10 includes a central processing unit (CPU) 10a that corresponds to the calculation unit, a random access memory (RAM) 10b that corresponds to the storage unit, a read only memory (ROM) 10c that corresponds to a storage unit, a communication unit 10d, the input unit 10e, and the display unit 10f. Each of these configurations is connected to each other via a bus such that the data can be transmitted and received. In this example, a case where the monitoring device 10 is configured with one computer will be described, but the monitoring device 10 may be realized by combining a plurality of computers. Further, the configuration illustrated in Fig. 2 is an example, and the monitoring device 10 may have configurations other than these, or may not have a part of these configurations.

The CPU 10a is a control unit that performs control related to execution of a program stored in the RAM 10b or ROM 10c, and calculates and processes data. The CPU 10a is a calculation unit that generates a model representing the relationship of the process data based on the forecast value of the process data input from a person, and executes a program (monitoring program) for monitoring the plant using the model. The CPU 10a receives various data from the input unit 10e or the communication unit 10d, displays the calculation result of the data on the display unit 10f, and stores the calculation result in the RAM 10b and the ROM 10c.

The RAM 10b may be a storage unit in which the data can be rewritten, and may be configured with, for example, a semiconductor storage element. The RAM 10b may store a program executed by the CPU 10a, and data such as process data input from a person, and design values of the process data. In addition, these are examples, and data other than these may be stored in the RAM 10b, or a part of these may not be stored.

The ROM 10c is a storage unit in which the data can be read, and may be configured with, for example, a semiconductor storage element. The ROM 10c may store, for example, a monitoring program or data that is not rewritten.

The communication unit 10d is an interface for connecting the monitoring device 10 to another device. The communication unit 10d may be connected to a communication network N such as the Internet.

The input unit 10e receives data input from the user, and may include, for example, a keyboard and a touch panel.

The display unit 10f visually displays the calculation result by the CPU 10a, and may be configured with, for example, a liquid crystal display (LCD) . The display unit 10f may display a drawing area on which the process data is drawn, and display the process data and the generated model in the drawing area.

The monitoring program may be stored in a storage medium (for example, RAM 10b or ROM 10c) that can be read by a computer and provided, or may be provided via a communication network connected by the communication unit 10d. In the monitoring device 10, the acquisition unit 11, the model generation unit 12, the determination unit 13, and the plotting unit 14 described with reference to Fig. 1 are realized by the CPU 10a executing the monitoring program. In addition, these physical configurations are examples and may not necessarily have to be independent configurations. For example, the monitoring device 10 may include a large-scale integration (LSI) in which the CPU 10a, the RAM 10b, and the ROM 10c are integrated.

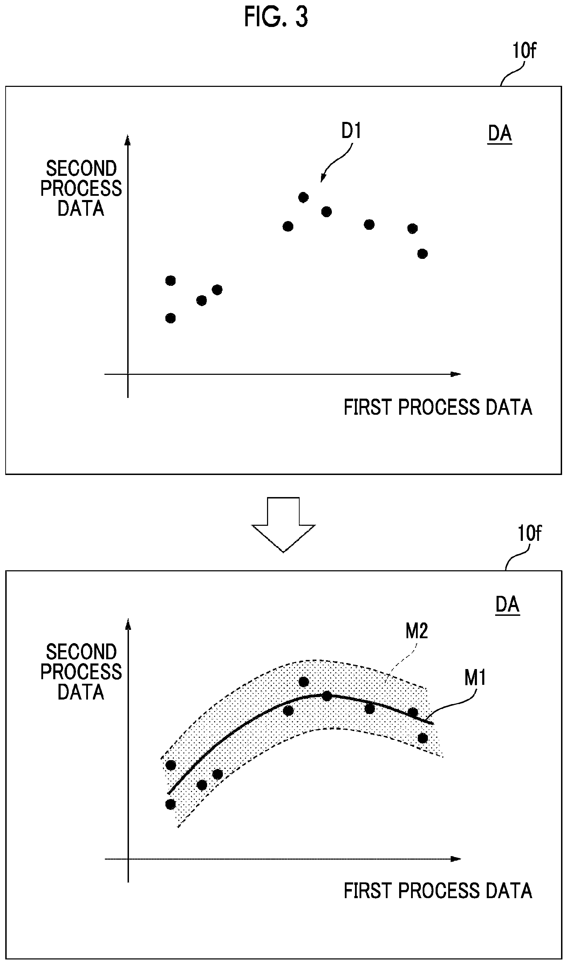

Fig. 3 is a view illustrating a model representing a relationship between the process data, which is generated by the monitoring device 10 according to the present embodiment. In the drawing, an example is illustrated in which the input of the forecast value of the process data is received from a person and a model is generated based on the forecast value (process data which is not actually measured) of the input process data.

The display unit 10f of the monitoring device 10 displays a drawing area DA on which the process data is drawn. The user of the monitoring device 10 plots data points D1 expected as a relationship between first process data and second process data in the drawing area DA by using the input unit 10e. The data points D1 may be input by a touch panel or a pointing device, but may be acquired from a storage unit built in the monitoring device 10 such as the RAM 10b or an external storage device. For example, the data point D1 may be a design value of the first process data and the second process data.

The model generation unit 12 generates a model representing the relationship between the first process data and the second process data based on the input data points D1. The model may include a graph M1 illustrating the relationship between the first process data and the second process data, and the display unit 10f may display the graph M1 in the drawing area DA. The model generation unit 12 may assume, for example, a predetermined function representing the relationship between the first process data and the second process data, and determine the parameter of the function by the least squares method such that the function conforms to the data point D1. In this manner, by displaying the graph M1 illustrating the relationship of the process data, it is possible to identify at a glance whether the generated model is appropriate.

The model may include a range M2 in which the process data fits in the vicinity of the graph M1 with a predetermined probability, and the display unit 10f may display the range M2 in the drawing area DA. For example, the model generation unit 12 may compute standard deviation σ of the input data point D1 and set ± σ as the range M2 centered on the graph M1 or ± 2σ as the range M2 centered on the graph M1. When the variation of the process data follows a normal distribution, the range of ± σ is the range where the process data fits in the vicinity of the graph M1 with a probability of 68.27%, and the range of ± 2σ is a range where the process data fits in the vicinity of the graph M1 with probability of 95.45%. In this manner, by displaying the range M2 in which the process data fits in the vicinity of the graph M1 with a predetermined probability, it is possible to identify at a glance whether the newly acquired process data is within the normal range.

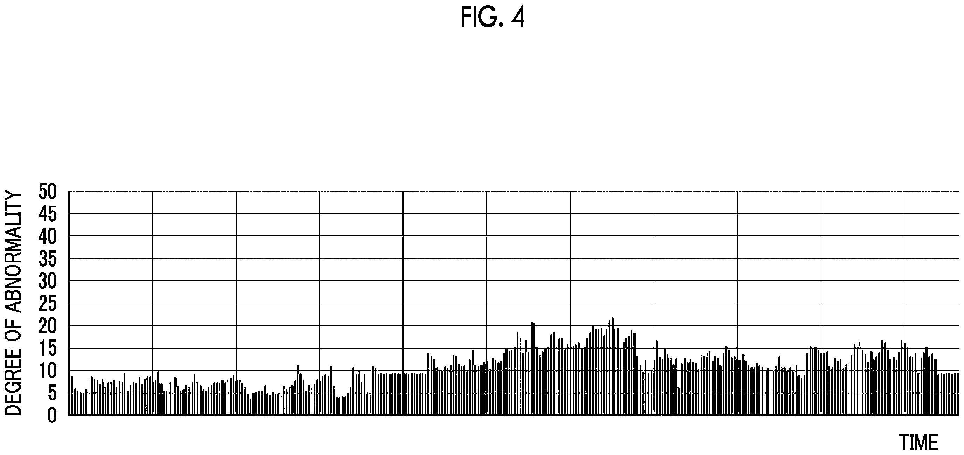

Fig. 4 is a view illustrating a degree of abnormality computed by the monitoring device 10 according to the present embodiment. In the drawing, the vertical axis illustrates the value of the degree of abnormality, the horizontal axis illustrates the time, and the time change of the degree of abnormality is illustrated as a bar graph.

The determination unit 13 of the monitoring device 10 may compute the degree of abnormality in the operation state of the plant 100 in the first determination mode or the second determination mode based on the actually measured process data, and display the computed degree of abnormality on the display unit 10f. The determination unit 13 may compute the degree of abnormality by a known abnormality determination algorithm, and for example, may compute a degree of abnormality a (x) of current process data x by a(x) = (x - µ)²/σ² based on an average µ and a variance σ² of the process data which is actually measured in the past. In this case, the square root of the degree of abnormality represents how many times the standard deviation of the current process data deviates based on the average of the past process data. For example, a case where the degree of abnormality is 25 means that the current process data is deviated by 5 times the standard deviation based on the average of the past process data. The determination unit 13 may periodically compute the degree of abnormality in the operation state of the plant 100 and display the value as a bar graph to display the degree of abnormality illustrated in Fig. 4, or may periodically compute the degree of abnormality of the operation state of the plant 100 and display the average value over a longer period as a bar graph to display the degree of abnormality illustrated in Fig. 4. Further, the determination unit 13 may compute the degree of abnormality based on how much the actually measured process data deviates from the graph M1. The determination unit 13 may compute the degree of abnormality based on, for example, at least one of a value indicating whether the actually measured process data is inside or outside the range M2 and the amount of deviation of the actually measured process data based on the standard deviation of the data points D1.

The determination unit 13 may determine the operation state of the plant 100 based on the computed degree of abnormality. For example, the determination unit 13 may compare the threshold set for the degree of abnormality with the newly computed degree of abnormality to determine that the operation state of the plant 100 is normal when the degree of abnormality is less than the threshold, and to determine that the operation state of the plant 100 is abnormality when the degree of abnormality is equal to or higher than the threshold.

By displaying the degree of abnormality as illustrated in Fig. 4, it is possible to quantitatively express whether the operation state of the plant 100 is normal or abnormal, and even in a case of a worker who is not proficient in reading process data, it is possible to make an appropriate determination on the operation state of the plant 100.

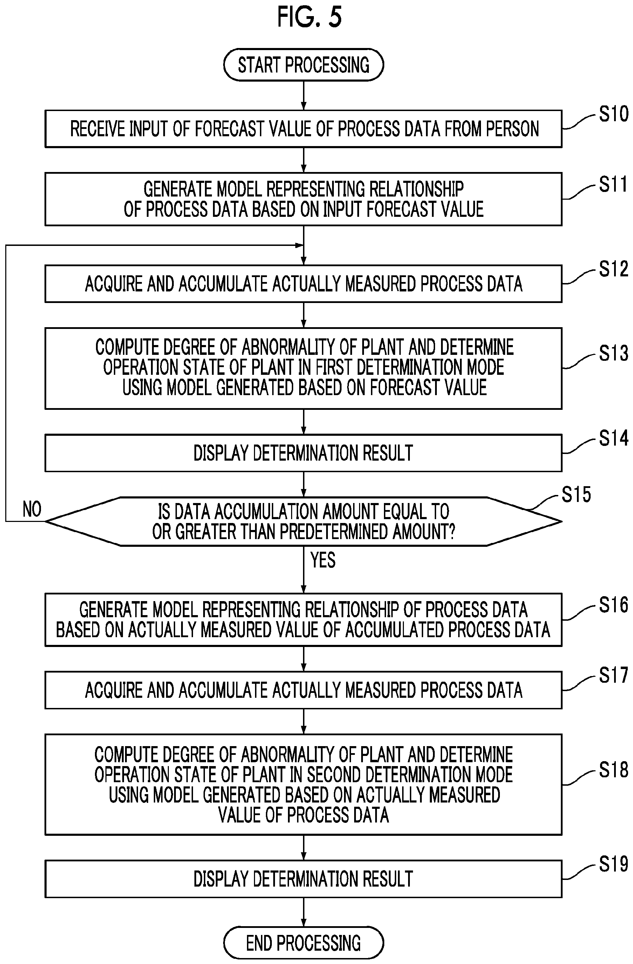

Fig. 5 is a flowchart of a determination process executed by the monitoring device 10 according to the present embodiment. First, the monitoring device 10 receives the input of the forecast value of the process data from a person (S10) . After this, the monitoring device 10 generates a model representing the relationship of the process data based on the input forecast value (S11). The model is used in the first determination mode.

The monitoring device 10 acquires the actually measured process data and accumulates the acquired process data in the storage unit (S12) . Then, the monitoring device 10 computes the degree of abnormality of the plant 100 and determines the operation state of the plant 100 in the first determination mode using the model generated based on the forecast value of the process data input by a person (S13). The monitoring device 10 displays the determination result on the display unit 10f (S14) . Here, the monitoring device 10 may display the degree of abnormality or display the actually measured process data together with the graph M1 and the range M2.

After this, the monitoring device 10 determines whether or not the data accumulation amount of the actually measured process data is equal to or greater than a predetermined amount (S15) . Here, the predetermined amount may be an amount that can generate a model representing the relationship of the process data based on the actually measured process data.

When the data accumulation amount of the actually measured process data is not equal to or greater than a predetermined amount (S15: NO), the monitoring device 10 newly acquires and accumulates the actually measured process data (S12), determines the operation state of the plant 100 (S13) in the first determination mode, and displays the determination result (S14) .

Meanwhile, when the data accumulation amount of the actually measured process data is equal to or greater than a predetermined amount (S15: YES), the monitoring device 10 generates a model representing the relationship of the process data based on the actually measured value of the accumulated process data (S16). Here, the monitoring device 10 may correct the model generated based on the forecast value of the process data which is not actually measured according to the actually measured value of the process data, or generate a new model using only the actually measured value of the process data.

After this, the monitoring device 10 acquires the actually measured process data and accumulates the acquired process data in the storage unit (S17). Then, the monitoring device 10 computes the degree of abnormality of the plant 100 and determines the operation state of the plant 100 in the second determination mode using the model generated based on the actually measured value of the process data (S18), and displays the determination result (S19). In this case, the monitoring device 10 may display the degree of abnormality or display the actually measured process data together with the model. When the model generated based on the forecast value of the process data input by a person and the model generated based on the actually measured value of the process data can be used, the monitoring device 10 may receive designation about which model to use. The monitoring device 10 may determine the operation state of the plant 100 based on the degree of abnormality computed by the model generated based on the forecast value of the process data input by a person, and the degree of abnormality computed by the model generated based on the actually measured value of the process data.

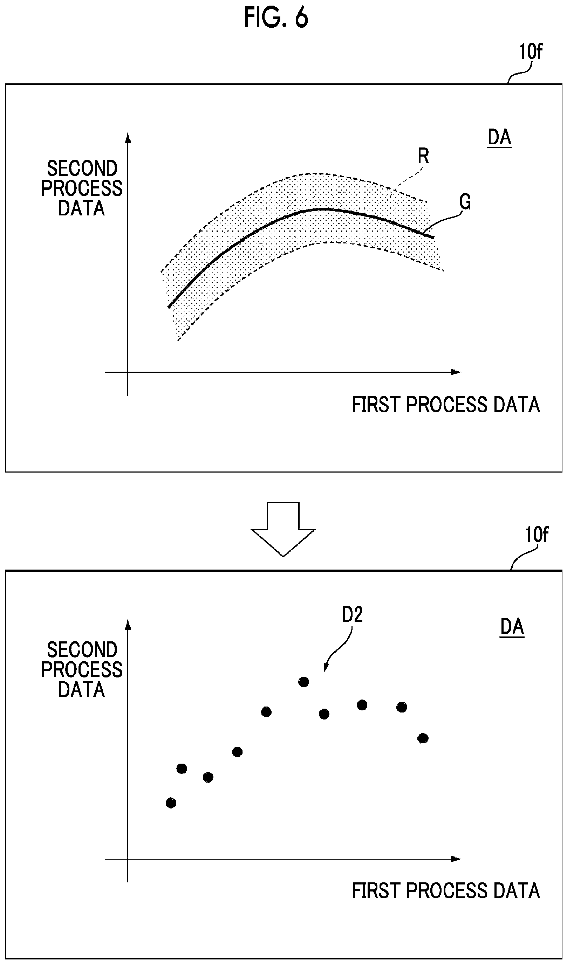

Fig. 6 is a view illustrating data points plotted by the monitoring device 10 according to the present embodiment. The drawing illustrates an example in which input of a handwritten graph G and a handwriting range R is received from a person, and data points D2 representing the input handwritten graph G and the handwriting range R are plotted in the drawing area DA.

The display unit 10f of the monitoring device 10 displays a drawing area DA on which the process data is drawn. The user of the monitoring device 10 uses the input unit 10e to input the graph G expected as the relationship between the first process data and the second process data. Further, the user inputs the handwriting range R including the handwritten graph. Here, the handwriting range R may be a range in which the process data is expected to fit in the vicinity of the handwritten graph G with a predetermined probability.

The plotting unit 14 of the monitoring device 10 plots the data points D2 representing the handwritten graph G and the handwriting range R in the drawing area DA. The plotting unit 14 may plot the data points D2 so as to follow a normal distribution having an average defined by the handwritten graph G and a variance defined by the handwriting range R, or may plot the data points D2 in the handwriting range R so as to follow a uniform distribution. After the data points D2 are plotted, the model generation unit 12 generates a model representing the relationship between the first process data and the second process data based on the data points D2.

By receiving the input of the handwritten graph G and plotting the data points D2 representing the handwritten graph G in the drawing area DA, it is possible to intuitively express the approximate relationship of the process data by hand, and to generate a model.

In addition, by receiving the input of the handwriting range R and plotting the data points D2 representing the handwritten graph G and the handwriting range R in the drawing area, it is possible to intuitively express the approximate relationship of the process data by hand, and to generate a model.

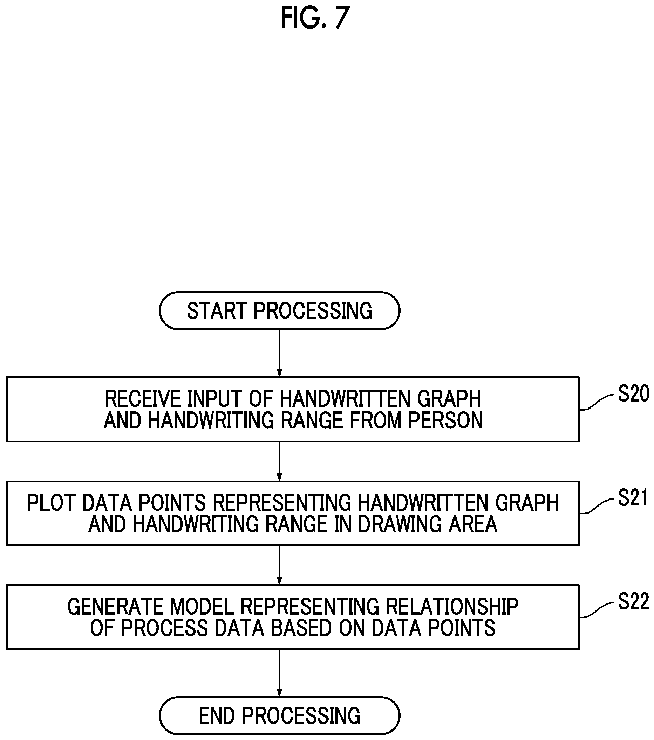

Fig. 7 is a flowchart of a model generation process executed by the monitoring device 10 according to the present embodiment. First, the monitoring device 10 receives the input of the handwritten graph and the handwriting range from a person (S20). Then, the monitoring device 10 plots the data points representing the handwritten graph and the handwriting range in the drawing area (S21).

After this, the monitoring device 10 generates a model representing the relationship of the process data based on the data points (S22). The monitoring device 10 may determine the operation state of the plant 100 in the first determination mode using the model generated in this manner.

The embodiments described above are for facilitating the understanding of the present invention, and are not for limiting and interpreting the present invention. Each element included in the embodiment and the disposition, material, condition, shape, and size thereof are not limited to those exemplified, and can be changed as appropriate. In addition, the configurations illustrated in different embodiments can be partially replaced or combined.

The display unit 10f of the monitoring device 10 is a display device that receives the input of the process data related to the plant, generate the model representing the relationship between the process data based on the input process data, determine the operation state of the plant in the first determination mode using the model generated based on the forecast value of the process data input by a person or in the second determination mode using the model generated based on the actually measured value of the process data, and display the determination result. The display device may display at least one of the input of the forecast value of the process data received from a person, and the actually measured value of the generated model and the process data together with the determination result.

### Reference Signs List

- 10: Monitoring device
- 10a: CPU
- 10b: RAM
- 10c: ROM
- 10d: Communication unit
- 10e: Input unit
- 10f: Display unit
- 11: Acquisition unit
- 12: Model generation unit
- 13: Determination unit
- 14: Plotting unit
- 100: Plant

## Claims

1. A monitoring device (10) comprising:
an acquisition unit (11) configured to acquire an actually measured value of process data related to a plant (100) ;
an input unit (10e) configured to receive input of a forecast value of the process data related to the plant (100) ;
a model generation unit (12) configured to generate a model representing a relationship between the process data based on the input process data;
a determination unit (13) configured to determine an operation state of the plant (100) in a first determination mode using the model which is generated based on the forecast value of the process data or in a second determination mode using the model which is generated based on the actually measured value of the process data; and
a display unit (10f) configured to display a determination result of the operation state determined by the determination unit (13),
**characterized in that**
when a data accumulation amount of the actually measured process data is smaller than a predetermined amount, the determination unit (13) determines the operation state of the plant (100) in the first determination mode, and
when the data accumulation amount of the actually measured process data is equal to or greater than the predetermined amount, the determination unit (13) determines the operation state of the plant (100) in the second determination mode.

2. The monitoring device (10) according to claim 1,
wherein the determination unit (13) is configured to compute a degree of abnormality of the operation state of the plant (100) and determine the operation state of the plant (100) based on the degree of abnormality in the first determination mode or the second determination mode.

3. The monitoring device (10) according to claim 1 or 2,
wherein the model includes a graph representing the relationship between the process data, and
the display unit (10f) is configured to display the graph.

4. The monitoring device (10) according to claim 3,
wherein the model includes a range in which the process data fits in a vicinity of the graph with a predetermined probability, and
the display unit (10f) is configured to display the graph and the range.

5. The monitoring device (10) according to any one of claims 1 to 4,
wherein the model generation unit (12) is configured to generate the model based on a design value of the process data.

6. The monitoring device (10) according to any one of claims 1 to 5,
wherein the input unit (10e) is configured to receive input of a handwritten graph into a drawing area in which the process data is drawn,
the monitoring device (10) further comprises a plotting unit (14) that plots data points representing the handwritten graph in the drawing area, and
the model generation unit (12) generates the model based on the data points.

7. The monitoring device (10) according to claim 6,
wherein the input unit (10e) is configured to receive input of a handwriting range including the handwritten graph in the drawing area, and
the plotting unit (14) plots data points representing the handwritten graph and the handwriting range in the drawing area.

8. A monitoring method executed by a monitoring device (10) that monitors a plant (100), the method comprising:
acquiring an actually measured value of process data related to the plant (100);
receiving input of a forecast value of the process data related to the plant (100);
generating a model representing a relationship between the process data based on the input process data;
the method being **characterized by** further comprising:
determining an operation state of the plant (100) in a first determination mode using the model which is generated based on the forecast value of the process data when a data accumulation amount of the actually measured process data is smaller than a predetermined amount or in a second determination mode using the model which is generated based on the actually measured value of the process data when the data accumulation amount of the actually measured process data is equal to or greater than the predetermined amount; and
displaying a determination result of the operation state determined by the determining.

9. A monitoring program for causing a monitoring device (10) that monitors a plant (100) to execute a process comprising:
acquiring an actually measured value of process data related to the plant (100);
receiving input of a forecast value of the process data related to the plant (100);
generating a model representing a relationship between the process data based on the input process data;
**characterized by** the process further comprising:
determining an operation state of the plant (100) in a first determination mode using the model which is generated based on the forecast value of the process data when a data accumulation amount of the actually measured process data is smaller than a predetermined amount or in a second determination mode using the model which is generated based on the actually measured value of the process data when the data accumulation amount of the actually measured process data is equal to or greater than the predetermined amount; and
displaying a determination result of the operation state determined by the determining.

## Patentansprüche

1. Überwachungsvorrichtung (10), umfassend:
eine Erfassungseinheit (11), die konfiguriert ist, einen tatsächlich gemessenen Wert von Prozessdaten bezüglich einer Anlage (100) zu erfassen;
eine Eingabeeinheit (10e), die konfiguriert ist, Eingabe eines Vorhersagewertes der Prozessdaten bezüglich der Anlage (100) zu empfangen;
eine Modellerzeugungseinheit (12), die konfiguriert ist, ein Modell zu erzeugen, das eine Beziehung zwischen den Prozessdaten auf der Grundlage der eingegebenen Prozessdaten darstellt;
eine Bestimmungseinheit (13), die konfiguriert ist, einen Betriebszustand der Anlage (100) in einem ersten Bestimmungsmodus unter Verwendung des Modells, das auf der Grundlage des Vorhersagewertes der Prozessdaten erzeugt wird, oder in einem zweiten Bestimmungsmodus unter Verwendung des Modells, das auf der Grundlage des tatsächlich gemessenen Wertes der Prozessdaten erzeugt wird, zu bestimmen; und
eine Anzeigeeinheit (10f), die konfiguriert ist, ein Bestimmungsergebnis des von der Bestimmungseinheit (13) bestimmten Betriebszustands anzuzeigen,
**dadurch gekennzeichnet, dass**
wenn eine Datenakkumulationsmenge der tatsächlich gemessenen Prozessdaten kleiner als eine vorbestimmte Menge ist, die Bestimmungseinheit (13) den Betriebszustand der Anlage (100) in dem ersten Bestimmungsmodus bestimmt, und
wenn die Datenakkumulationsmenge der tatsächlich gemessenen Prozessdaten gleich oder größer als die vorbestimmte Menge ist, die Bestimmungseinheit (13) den Betriebszustand der Anlage (100) in dem zweiten Bestimmungsmodus bestimmt.

2. Überwachungsvorrichtung (10) nach Anspruch 1,
wobei die Bestimmungseinheit (13) konfiguriert ist, einen Grad an Abnormalität des Betriebszustands der Anlage (100) zu berechnen und den Betriebszustand der Anlage (100) auf der Grundlage des Grads an Abnormalität in dem ersten Bestimmungsmodus oder dem zweiten Bestimmungsmodus zu bestimmen.

3. Überwachungsvorrichtung (10) nach Anspruch 1 oder 2,
wobei das Modell einen Graphen enthält, der die Beziehung zwischen den Prozessdaten darstellt, und
die Anzeigeeinheit (10f) konfiguriert ist, den Graphen anzuzeigen.

4. Überwachungsvorrichtung (10) nach Anspruch 3,
wobei das Modell einen Bereich umfasst, in dem die Prozessdaten mit einer vorbestimmten Wahrscheinlichkeit in eine Umgebung des Graphen passen, und
die Anzeigeeinheit (10f) konfiguriert ist, den Graphen und den Bereich anzuzeigen.

5. Überwachungsvorrichtung (10) nach einem der Ansprüche 1 bis 4,
wobei die Modellerzeugungseinheit (12) konfiguriert ist, das Modell auf der Grundlage eines Entwurfswertes der Prozessdaten zu erzeugen.

6. Überwachungsvorrichtung (10) nach einem der Ansprüche 1 bis 5,
wobei die Eingabeeinheit (10e) konfiguriert ist, Eingabe eines handgeschriebenen Graphen in einem Zeichenbereich zu empfangen, in dem die Prozessdaten gezeichnet sind,
die Überwachungsvorrichtung (10) ferner eine Plottereinheit (14) umfasst, die Datenpunkte, die den handgeschriebenen Graphen darstellen, in dem Zeichenbereich aufzeichnet, und
die Modellerzeugungseinheit (12) das Modell auf der Grundlage der Datenpunkte erzeugt.

7. Überwachungsvorrichtung (10) nach Anspruch 6,
wobei die Eingabeeinheit (10e) konfiguriert ist, Eingabe eines handschriftlichen Bereichs einschließlich des handgeschriebenen Graphen in dem Zeichenbereich zu empfangen, und
die Plottereinheit (14) Datenpunkte aufzeichnet, die den handgeschriebenen Graphen und den handschriftlichen Bereich in dem Zeichenbereich darstellen.

8. Überwachungsverfahren, das von einer Überwachungsvorrichtung (10) ausgeführt wird, die eine Anlage (100) überwacht, wobei das Verfahren umfasst:
Erfassen eines tatsächlich gemessenen Wertes von Prozessdaten bezüglich der Anlage (100);
Empfangen eines Vorhersagewertes der Prozessdaten bezüglich der Anlage (100);
Erzeugen eines Modells, das eine Beziehung zwischen den Prozessdaten auf der Grundlage der eingegebenen Prozessdaten darstellt;
wobei das Verfahren **dadurch gekennzeichnet ist, dass** es ferner umfasst:
Bestimmen eines Betriebszustands der Anlage (100) in einem ersten Bestimmungsmodus unter Verwendung des Modells, das auf der Grundlage des Vorhersagewertes der Prozessdaten erzeugt wird, wenn eine Datenakkumulationsmenge der tatsächlich gemessenen Prozessdaten kleiner als eine vorbestimmte Menge ist, oder in einem zweiten Bestimmungsmodus unter Verwendung des Modells, das auf der Grundlage des tatsächlich gemessenen Wertes der Prozessdaten erzeugt wird, wenn die Datenakkumulationsmenge der tatsächlich gemessenen Prozessdaten gleich oder größer als die vorbestimmte Menge ist; und
Anzeigen eines Bestimmungsergebnisses des Betriebszustands, der durch die Bestimmung bestimmt wurde.

9. Überwachungsprogramm, um eine Überwachungsvorrichtung (10), die eine Anlage (100) überwacht, zu veranlassen, einen Prozess auszuführen, umfassend:
Erfassen eines tatsächlich gemessenen Wertes von Prozessdaten bezüglich der Anlage (100);
Empfangen eines Vorhersagewertes der Prozessdaten bezüglich der Anlage (100);
Erzeugen eines Modells, das eine Beziehung zwischen den Prozessdaten auf der Grundlage der eingegebenen Prozessdaten darstellt;
**dadurch gekennzeichnet, dass** das Verfahren ferner umfasst:
Bestimmen eines Betriebszustands der Anlage (100) in einem ersten Bestimmungsmodus unter Verwendung des Modells, das auf der Grundlage des Vorhersagewertes der Prozessdaten erzeugt wird, wenn eine Datenakkumulationsmenge der tatsächlich gemessenen Prozessdaten kleiner als eine vorbestimmte Menge ist, oder in einem zweiten Bestimmungsmodus unter Verwendung des Modells, das auf der Grundlage des tatsächlich gemessenen Wertes der Prozessdaten erzeugt wird, wenn die Datenakkumulationsmenge der tatsächlich gemessenen Prozessdaten gleich oder größer als die vorbestimmte Menge ist; und
Anzeigen eines Bestimmungsergebnisses des Betriebszustands, der durch die Bestimmung bestimmt wurde.

## Revendications

1. Un dispositif de surveillance (10), comprenant :
une unité d'acquisition (11) configurée pour acquérir une valeur réellement mesurée de données de processus connexes à une installation (100) ;
une unité d'entrée (10e) configurée pour recevoir en entrée une valeur prévisionnelle des données de processus connexes à l'installation (100) ;
une unité de génération de modèle (12) configurée pour générer un modèle représentant une relation entre les données de processus sur la base des données de processus appliquées en entrée ;
une unité de détermination (13) configurée pour déterminer un état de fonctionnement de l'installation (100) dans un premier mode de détermination, à l'aide du modèle généré sur la base de la valeur prévisionnelle des données de processus, ou dans un deuxième mode de détermination, à l'aide du modèle généré sur la base de la valeur réellement mesurée des données de processus ; et
une unité d'affichage (10f) configurée pour afficher un résultat de détermination de l'état de fonctionnement déterminé par l'unité de détermination (13) ;
**caractérisé en ce que**
lorsqu'une quantité d'accumulation de données des données de processus réellement mesurées est inférieure à une quantité prédéterminée, l'unité de détermination (13) détermine l'état de fonctionnement de l'installation (100) dans le premier mode de détermination, et
lorsque la quantité d'accumulation de données des données de processus réellement mesurées est égale ou supérieure à la quantité prédéterminée, l'unité de détermination (13) détermine l'état de fonctionnement de l'installation (100) dans le deuxième mode de détermination.

2. Le dispositif de surveillance (10) selon la revendication 1,
dans lequel l'unité de détermination (13) est configurée pour calculer un degré d'anomalie de l'état de fonctionnement de l'installation (100) et à déterminer l'état de fonctionnement de l'installation (100) sur la base du degré d'anomalie dans le premier mode de détermination ou dans le deuxième mode de détermination.

3. Le dispositif de surveillance (10) selon la revendication 1 ou 2,
dans lequel le modèle inclut un graphique représentant la relation entre les données de processus ; et
l'unité d'affichage (10f) est configurée de manière à afficher le graphique.

4. Le dispositif de surveillance (10) selon la revendication 3,
dans lequel le modèle inclut une plage dans laquelle les données de processus s'inscrivent dans un voisinage du graphique avec une probabilité prédéterminée ; et
l'unité d'affichage (10f) est configurée de manière à afficher le graphique et la plage.

5. Le dispositif de surveillance (10) selon l'une quelconque des revendications 1 à 4,
dans lequel l'unité de génération de modèle (12) est configurée de manière à générer le modèle sur la base d'une valeur de conception des données de processus.

6. Le dispositif de surveillance (10) selon l'une quelconque des revendications 1 à 5,
dans lequel l'unité d'entrée (10e) est configurée pour recevoir en entrée un graphique manuscrit dans une zone de dessin dans laquelle les données de processus sont dessinées ;
le dispositif de surveillance (10) comprend en outre une unité de traçage (14) qui trace des points de données représentant le graphe manuscrit dans la zone de dessin ; et
l'unité de génération de modèle (12) génère le modèle sur la base des points de données.

7. Le dispositif de surveillance (10) selon la revendication 6,
dans lequel l'unité d'entrée (10e) est configurée pour recevoir en entrée une plage d'écriture manuscrite incluant le graphique manuscrit dans la zone de dessin ; et
l'unité de traçage (14) trace des points de données représentant le graphique manuscrit et la plage d'écriture manuscrite dans la zone de dessin.

8. Une méthode de surveillance exécutée par un dispositif de surveillance (10) qui surveille une installation (100), la méthode comprenant les étapes ci-dessous consistant à :
acquérir une valeur réellement mesurée de données de processus connexes à l'installation (100) ;
recevoir en entrée une valeur prévisionnelle des données de processus connexes à l'installation (100) ;
générer un modèle représentant une relation entre les données de processus sur la base des données de processus appliquées en entrée ;
la méthode étant **caractérisée en ce qu'**elle comprend en outre les étapes ci-dessous consistant à :
déterminer un état de fonctionnement de l'installation (100) dans un premier mode de détermination, à l'aide du modèle généré sur la base de la valeur prévisionnelle des données de processus, lorsqu'une quantité d'accumulation de données des données de processus réellement mesurées est inférieure à une quantité prédéterminée, ou dans un deuxième mode de détermination, à l'aide du modèle généré sur la base de la valeur réellement mesurée des données de processus, lorsque la quantité d'accumulation de données des données de processus réellement mesurées est égale ou supérieure à la quantité prédéterminée ; et
afficher un résultat de détermination de l'état de fonctionnement déterminé au cours de l'étape de détermination.

9. Un programme de surveillance destiné à amener un dispositif de surveillance (10) qui surveille une installation (100) à exécuter un processus comprenant les étapes ci-dessous consistant à :
acquérir une valeur réellement mesurée de données de processus connexes à l'installation (100) ;
recevoir en entrée une valeur prévisionnelle des données de processus connexes à l'installation (100) ;
générer un modèle représentant une relation entre les données de processus sur la base des données de processus appliquées en entrée ;
**caractérisé en ce que** le processus comprend en outre les étapes ci-dessous consistant à :
déterminer un état de fonctionnement de l'installation (100) dans un premier mode de détermination, à l'aide du modèle généré sur la base de la valeur prévisionnelle des données de processus, lorsqu'une quantité d'accumulation de données des données de processus réellement mesurées est inférieure à une quantité prédéterminée, ou dans un deuxième mode de détermination, à l'aide du modèle généré sur la base de la valeur réellement mesurée des données de processus, lorsque la quantité d'accumulation de données des données de processus réellement mesurées est égale ou supérieure à la quantité prédéterminée ; et
afficher un résultat de détermination de l'état de fonctionnement déterminé au cours de l'étape de détermination.
